# EUROPEAN PATENT SPECIFICATION

(11) **EP 3 836 574 B1**
(45) Date of publication and mention of the grant of the patent: **07.01.2026**
(21) Application number: 18929376.4
(22) Date of filing: 07.08.2018
(51) Int. Cl.: H04W 4/029, H04W 4/40, G08G 5/00, H04W 8/08, G08G 5/22, G08G 5/26, G08G 5/53, G08G 5/55, G08G 5/57

(54) **INFORMATION TRANSMISSION METHOD AND DEVICE**
INFORMATIONSÜBERTRAGUNGSVERFAHREN UND -VORRICHTUNG
PROCÉDÉ ET DISPOSITIF DE TRANSMISSION D'INFORMATIONS

(43) Date of publication of application: 16.06.2021
(73) Proprietor: Beijing Xiaomi Mobile Software Co., Ltd., Beijing 100085 (CN)
(72) Inventor: HONG, Wei, Beijing 100085 (CN)
(74) Representative: Dehns Germany Partnerschaft mbB
(86) International application number: PCT/CN2018/099224
(87) International publication number: WO 2020/029084

(56) References cited:
- CN-A- 102 156 481
- CN-A- 106 550 182
- CN-A- 107 204 130
- CN-A- 108 353 252
- US-A1- 2016 288 905
- US-A1- 2017 142 555
- US-A1- 2018 162 555
- ERICSSON: "Introduction of Release-15 Aerial functionality", vol. RAN WG2, no. Busan, Korea; 20180521 - 20180525, 5 June 2018 (2018-06-05), XP051520529, Retrieved from the Internet <URL:http://www.3gpp.org/ftp/tsg%5Fran/WG2%5FRL2/TSGR2%5F102/Docs/R2%2D1809202%2Ezip> [retrieved on 20180605]
- HUAWEI ET AL: "Discussion on flight path information", vol. RAN WG2, no. Sanya, China; 20180416 - 20180420, 14 April 2018 (2018-04-14), XP051428803, Retrieved from the Internet <URL:http://www.3gpp.org/ftp/Meetings%5F3GPP%5FSYNC/RAN2/Docs/> [retrieved on 20180414]

## Description

### TECHNICAL FIELD

The disclosure relates to a communication field, and more particularly to, an information transmission method and device.

### BACKGROUND

Unmanned aircraft is referred to as Unmanned Aerial Vehicle (UAV) for short, which is an unmanned aerial vehicle operated by radio remote control equipment and built-in program control devices.

With continuous development of UAV technologies, UAV has been popularized. In the related art, in order to further expand an application range of a UAV, cellular networks need to provide services that meet the needs of the UAV. However, the existing cellular networks do not have a technical solution for obtaining the flight path information of the UAV, which reduces the quality of service provided by the cellular network for the UAV. XP051520529 (ERICSSON) provides an introduction of release-15 aerial functionality; US 2017/142555 A1 discloses a method for providing location information of a terminal and in a communication network; XP051428803 (HUAWEI ET AL) discloses a discussion on flight path information

### SUMMARY

In order to overcome the problems in the related art, embodiments of the present disclosure provide an information transmission method and device.

In a first aspect, the disclosure provides an information transmission method as defined by claim 1.

In some embodiments, transmitting, by the UAV, the timestamp indication information to the base station includes: adding, by the UAV, the timestamp indication information to a first radio resource control (RRC) signaling; and transmitting, by the UAV, the first RRC signaling to the base station to enable the base station to obtain the timestamp indication information from the first RRC signaling.

In some embodiments, the first RRC signaling includes at least one of: RRC connection reconfiguration complete signaling; or RRC connection re-establishment complete signaling; or RRC connection resume complete signaling; or RRC connection setup complete signaling including a timestamp available information unit configured to carry the timestamp indication information.

In some embodiments, the method further includes: determining that the timestamp information is carried when reporting the flight path information based on the configuration information.

In some embodiments, the configuration information is configured to instruct the UAV to report the flight path information carrying the timestamp information when the base station determines to perform the extraction and switching preparation for the UAV; or, the configuration information is configured to instruct the UAV to report the flight path information carrying the timestamp information when the base station determines to require the UAV to return data in real time during the flight.

In some embodiments, receiving, by the UAV, the configuration information transmitted by the base station includes: receiving, by the UAV, a second RRC signaling transmitted by the base station, in which the second RRC signaling includes the configuration information; and acquiring, by the UAV, the configuration information from the second RRC signaling. The second RRC signaling includes a UE information request signaling, and the UE information request signaling includes a flight path information request unit configured to carry the configuration information.

In some embodiments, the method further includes: adding, by the UAV, the flight path information carrying the timestamp information to a third RRC signaling when reporting the flight path information; and transmitting, by the UAV, the third RRC signaling to the base station to enable the base station to obtain the flight path information carrying the timestamp information from the third RRC signaling. The third RRC signaling includes a UE information response signaling, the UE information response signaling includes a flight path information report unit configured to carry the flight path information carrying the timestamp information.

In some embodiments, receiving, by the base station, the timestamp indication information transmitted by the UAV includes: receiving, by the base station, a first radio resource control (RRC) signaling transmitted by the UAV, in which the first RRC signaling includes the timestamp indication information; and obtaining, by the base station, the timestamp indication information from the first RRC signaling.

In some embodiments, determining, by the base station, whether the UAV is required to report the timestamp information includes: determining, by the base station, whether to perform an extraction and switching preparation for the UAV, wherein the extraction and switching preparation is configured to indicate a need of the UAV to return data in real time during flight; determining, by the base station, that the UAV is required to report the timestamp information when it is determined to perform the extraction and switching preparation for the UAV; and determining, by the base station, that the UAV is not required to report the timestamp information when it is determined to not perform the extraction and switching preparation for the UAV.

In some embodiments, determining, by the base station, whether to perform the extraction and switching preparation for the UAV includes: determining, by the base station, whether the UAV needs to return data in real time during the flight; determining, by the base station, to perform the extraction and switching preparation for the UAV when the UAV needs to return data in real time during the flight; and determining, by the base station, to not perform the extraction and switching preparation for the UAV when there is no need for the UAV to return data in real time during the flight.

In some embodiments, transmitting, by the base station, the configuration information to the UAV includes: adding, by the base station, the configuration information to a second RRC signaling; and transmitting, by the base station, the configuration information to the UAV to enable the UAV to obtain the configuration information from the second RRC signaling. The second RRC signaling includes a UE information request signaling, and the UE information request signaling includes a flight path information request unit configured to carry the configuration information.

In some embodiments, the method further includes: receiving, by the base station, a third RRC signaling transmitted by the UAV, in which the third RRC signaling includes the flight path information carrying the timestamp information; and obtaining, by the base station, the flight path information carrying the timestamp information from the third RRC signaling. The third RRC signaling includes a UE information response signaling, and the UE information response signaling includes a flight path information report unit configured to carry the flight path information carrying the timestamp information.

In a second aspect, the disclosure provides a system for information transmission comprising an unmanned aerial vehicle (UAV) and a base station as defined by claim 13.

The technical solution according to the embodiments of the present disclosure may include the following beneficial effects.

The UAV of the disclosure determines whether flight path information of the UAV includes timestamp information, generates timestamp indication information for indicating whether the flight path information of the UAV includes the timestamp information, and transmits the timestamp indication information to a base station, to enable the base station to determine whether the flight path information of the UAV includes the timestamp information based on the timestamp indication information, the base station can subsequently determines, according to its needs, whether to require the UAV to report the timestamp information, so that the reporting efficiency of the UAV is improved, and resources and signaling are saved.

After the base station receives the timestamp indication information transmitted by the UAV, the base station is enabled to determine whether the flight path information of the UAV includes the timestamp information based on the timestamp indication information, and the base station can subsequently determine, according to its needs, whether to require the UAV to report the timestamp information, so that the reporting efficiency of the UAV is improved, and resources and signaling are saved.

It is to be understood that both the foregoing general description and the following detailed description are exemplary and explanatory only and are not restrictive of the present disclosure, as claimed.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a flowchart of an information transmission method according to an exemplary embodiment.
FIG. 2 is an application scenario diagram of an information transmission method according to an exemplary embodiment.
FIG. 3 is a flowchart of another information transmission method according to an exemplary embodiment.
FIG. 4 is a flowchart of an information transmission method according to an exemplary embodiment.
FIG. 5 is a flowchart of another information transmission method according to an exemplary embodiment.
FIG. 6 is a flowchart of another information transmission method according to an exemplary embodiment.
FIG. 7 is an information interaction diagram of an information transmission method according to an exemplary embodiment.
FIG. 8 is a block diagram of an information transmission device according to an exemplary embodiment.
FIG. 9 is a block diagram of another information transmission device according to an exemplary embodiment.
FIG. 10 is a block diagram of another information transmission device according to an exemplary embodiment.
FIG. 11 is a block diagram of another information transmission device according to an exemplary embodiment.
FIG. 12 is a block diagram of another information transmission device according to an exemplary embodiment.
FIG. 13 is a block diagram of an information transmission device according to an exemplary embodiment.
FIG. 14 is a block diagram of another information transmission device according to an exemplary embodiment.
FIG. 15 is a block diagram of another information transmission device according to an exemplary embodiment.
FIG. 16 is a block diagram of another information transmission device according to an exemplary embodiment.
FIG. 17 is a block diagram of another information transmission device according to an exemplary embodiment.
FIG. 18 is a block diagram of another information transmission device according to an exemplary embodiment.
FIG. 19 is a block diagram of another information transmission device according to an exemplary embodiment.
FIG. 20 is a schematic diagram of an information transmission device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

The terms used in the present disclosure are only used to describe specific embodiments, and are not intended to limit the present disclosure. The singular forms "a", "said" and "the" used in the present disclosure and appended claims are also intended to include plural forms, unless the context clearly indicates other meanings. It should also be understood that the term "and/or" as used herein refers to any or all possible combinations of one or more of the associated listed items.

It should be understood that although the terms first, second, and third, may be used in this disclosure for information description, the information should not be limited to these terms. These terms are only used to distinguish the same type of information from other information. For example, without departing from the scope of the present disclosure, the indication information may also be referred to as the second information, and similarly, the second information may also be referred to as the indication information. Depending on the context, the character "if" as used herein is interpreted as "at the time", "when" or "in response to determining".

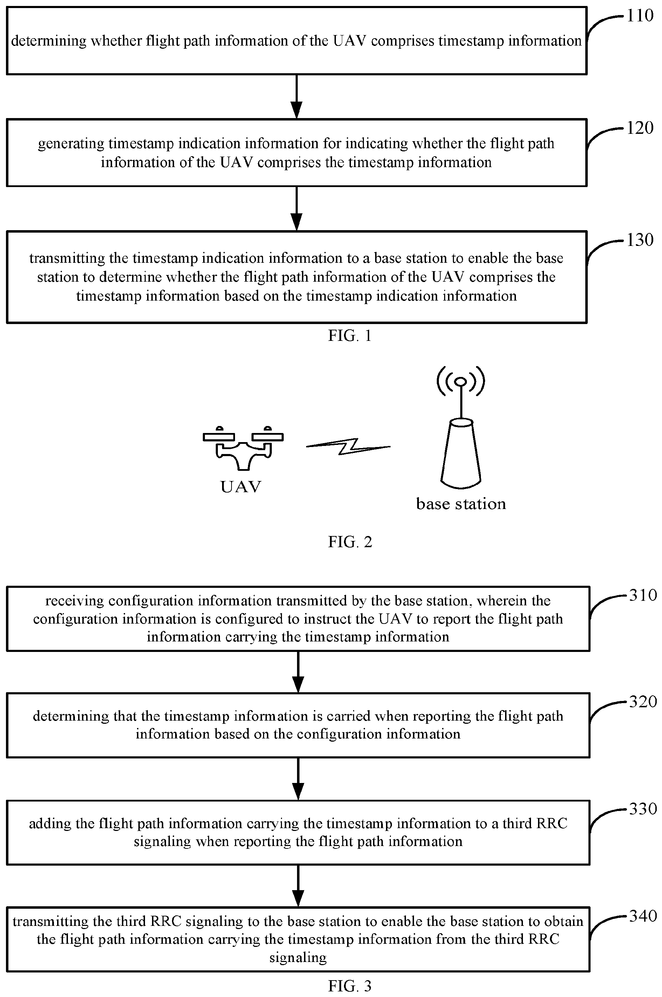

FIG. 1 is a flowchart of an information transmission method according to an exemplary embodiment. FIG. 2 is an application scenario diagram of an information transmission method according to an exemplary embodiment. The information transmission method is applied to an UAV. As illustrated in FIG. 1, the information transmission method may include the following steps 110-130.

At block 110, it is determined whether flight path information of the UAV includes timestamp information.

In an embodiment, the flight path information of the UAV may or may not include the timestamp information. After determining whether the flight path information of the UAV includes the timestamp information, a base station is informed of the determination result on whether the flight path information of the UAV includes the timestamp information, so that the base station can subsequently determines, according to its needs, whether to require the UAV to report the timestamp information.

At block 120, timestamp indication information for indicating whether the flight path information of the UAV includes the timestamp information is generated.

In an embodiment, the timestamp indication information may include first content or second content. The first content is used to indicate that the flight path information of the UAV includes the timestamp information, and the second content is used to indicate that the flight path information of the UAV does not include the timestamp information.

At block 130, the timestamp indication information is transmitted to a base station to enable the base station to determine whether the flight path information of the UAV includes the timestamp information based on the timestamp indication information.

In an embodiment, at block 130, transmitting the timestamp indication information to the base station through a first radio resource control (RRC) signaling includes:
(1-1) adding the timestamp indication information to the first RRC signaling; and
(1-2) transmitting the first RRC signaling to the base station to enable the base station to obtain the timestamp indication information from the first RRC signaling.

In an embodiment, the first RRC signaling includes but not limited to at least one of:
(2-1) RRC connection reconfiguration complete (RRCConnectionReconfigurationComplete) signaling; or
(2-2) RRC connection re-establishment complete (RRCConnectionReestablishmentComplete) signaling; or
(2-3) RRC connection resume complete (RRCConnectionResumeComplete) signaling; or
(2-4) RRC connection setup complete (RRCConnectionSetupComplete) signaling including a timestamp available (TimestampAvailable) information unit configured to carry the timestamp indication information.

The timestamp available information unit in (2-4) may be included in an information unit for indicating path information, or may be an independent information unit. The information unit is an information unit in the RRC connection setup complete signaling. In addition, when step 130 is executed, the timestamp indication information is added to the timestamp available information unit of the RRC connection setup complete signaling, and then the RRC connection setup complete signaling is transmitted to the base station, so that the base station could obtain the timestamp indication information in the timestamp available information unit of the RRC connection setup complete signaling.

In an example application scenario, as illustrated in FIG. 2, the application scenario includes an UAV and a base station. The base station is a cellular-network base station that provides current services for the UAV. After the UAV determines whether the flight path information of the UAV includes the timestamp information, the UAV generates the timestamp indication information for indicating whether the flight path information of the UAV includes the timestamp information, and the timestamp indication information is transmitted to the base station. For example, the UAV adds the timestamp indication information to the first RRC signaling, and then transmits the first RRC signaling to the base station, to enable the base station to determine whether the flight path information of the UAV includes the timestamp information based on the timestamp indication information, the base station can subsequently determine, according to its needs, whether to require the UAV to report the timestamp information.

Based on the above embodiments, by determining whether the flight path information of the UAV includes the timestamp information, the timestamp indication information for indicating whether the flight path information of the UAV includes the timestamp information is generated, and the timestamp indication information is transmitted to the base station, to enable the base station to determine whether the flight path information of the UAV includes the timestamp information based on the timestamp indication information, the base station can subsequently determine, according to its needs, whether to require the UAV to report the timestamp information, so that the reporting efficiency of the unmanned aerial vehicle is improved, and resources and signaling are saved.

FIG. 3 is a flowchart of another information transmission method according to an exemplary embodiment. The information transmission method is applied to an UAV. Based on FIG. 1, as illustrated in FIG. 3, the information transmission method may include the following steps 310-320.

At block 310, configuration information transmitted by the base station is received, in which the configuration information is configured to instruct the UAV to report the flight path information carrying the timestamp information.

In an embodiment, when the base station transmits the configuration information, the base station is informed that the flight path information of the UAV includes the timestamp information, and it is necessary for the UAV to carry the timestamp information when reporting the flight path information, so that after the UAV receives the configuration information sent by the base station, the UAV reports the flight path information carrying the timestamp information.

In an embodiment, when executing step 310, receiving the configuration information through a second RRC signaling includes:
(3-1) receiving the second RRC signaling transmitted by the base station, in which the second RRC signaling includes the configuration information; and
(3-2) acquiring the configuration information from the second RRC signaling.

In an embodiment, the second RRC signaling includes a UE information request (UEInformationRequest) signaling, and the UE information request signaling includes a flight path information request (FlightPathInformationReq) unit configured to carry the configuration information.

At block 320, it is determined whether the timestamp information is carried when reporting the flight path information based on the configuration information.

In an embodiment, the information transmission method may include the following steps 330-340.

At block 330, the flight path information carrying the timestamp information is added to a third RRC signaling when reporting the flight path information.

At block 340, the third RRC signaling is transmitted to the base station to enable the base station to obtain the flight path information carrying the timestamp information from the third RRC signaling.

In an embodiment, the third RRC signaling at block 330 may include UE information response (UEInformationResponse) signaling, the UE information response signaling includes a flight path information report (FlightPathInformationReport) unit configured to carry the flight path information carrying the timestamp information. In other words, when the UAV reports the flight path information, the flight path information carrying the timestamp information is added to a flight path information reporting unit of a terminal information response signaling, and then the terminal information response signaling is transmitted to the base station, so that the base station could obtain the flight path information carrying the timestamp information from the flight path information reporting unit of the terminal information response signaling.

It can be seen from the above embodiments that by receiving the configuration information transmitted by the base station for instructing the UAV to transmit the flight path information carrying the timestamp information. According to the configuration information, it is determined whether the timestamp information is carried when reporting the flight path information based on the configuration information, and the flight path information carrying the timestamp information is added to the third RRC signaling when reporting the flight path information, and the third RRC signaling is transmitted to the base station, so that the base station could obtain the flight path information carrying the timestamp information from the third RRC signaling, and the flight path information carrying the timestamp information is transmitted according to the configuration of the base station, and reliability of information transmission is improved through the third RRC signaling.

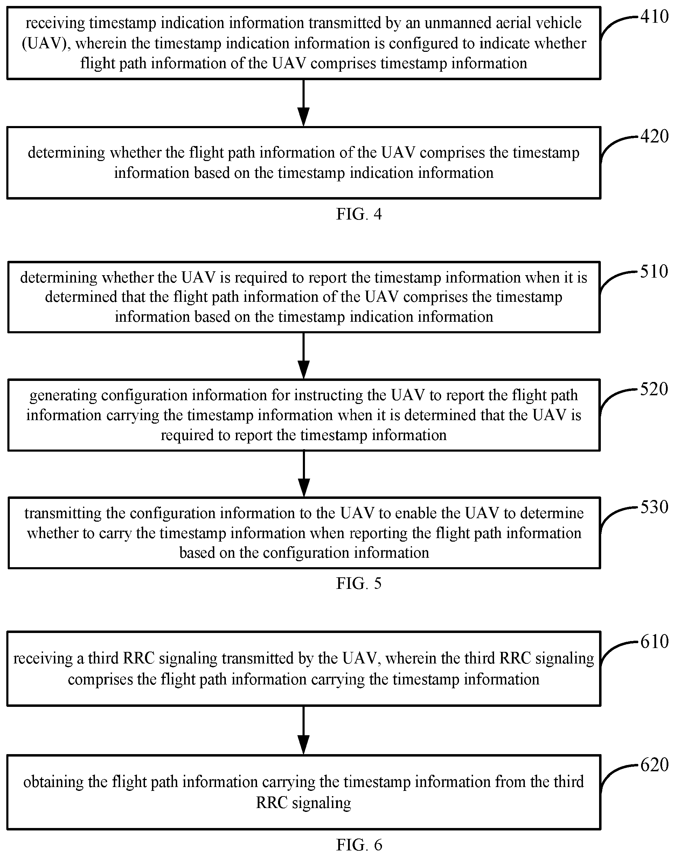

FIG. 4 is a flowchart of an information transmission method according to an exemplary embodiment. The information transmission method is applied to an UAV. As illustrated in FIG. 4, the information transmission method may include the following steps 410-420.

At block 410, timestamp indication information transmitted by the UAV is received, in which the timestamp indication information is configured to indicate whether flight path information of the UAV includes timestamp information.

In an embodiment, the timestamp indication information may include first content or second content. The first content is used to indicate that the flight path information of the UAV includes the timestamp information, and the second content is used to indicate that the flight path information of the UAV does not include the timestamp information.

In an embodiment, when executing step 410, receiving the timestamp indication information through a first RRC signaling includes:
(4-1) receiving a first RRC signaling transmitted by the UAV, in which the first RRC signaling includes the timestamp indication information; and
(4-2) obtaining the timestamp indication information from the first RRC signaling.

In an embodiment, the first RRC signaling includes but not limited to at least one of:
(5-1) RRC connection reconfiguration complete signaling; or
(5-2) RRC connection re-establishment complete signaling; or
(5-3) RRC connection resume complete signaling; or
(5-4) RRC connection setup complete signaling including a timestamp available information unit configured to carry the timestamp indication information.

The timestamp available information unit in (5-4) may be included in an information unit for indicating path information, or may be an independent information unit. The information unit is an information unit in the RRC connection setup complete signaling. In addition, when step 410 is executed, the RRC connection setup complete signaling transmitted by the UAV may be received, and the timestamp indication information may be obtained from the timestamp available information unit of the RRC connection setup complete signaling.

At block 420, it is determined whether the flight path information of the UAV includes the timestamp information based on the timestamp indication information.

In an embodiment, the flight path information of the UAV may or may not include the timestamp information. The base station learns whether the flight path information of the UAV includes the timestamp information according to the timestamp indication information, which is convenient for the base station to subsequently determine whether to require the UAV to report the timestamp information according to its own needs.

It can be seen from the above embodiments that after receiving the timestamp indication information transmitted by the UAV, it is determined whether the flight path information of the UAV includes the timestamp information according to the timestamp indication information, so that the base station could subsequently determine whether to require the UAV to report the timestamp information according to its own needs, thereby improving the UAV reporting efficiency and saving resources and signaling.

FIG. 5 is a flowchart of another information transmission method according to an exemplary embodiment. The information transmission method is applied to an UAV. Based on FIG. 4, as illustrated in FIG. 5, the information transmission method may include the following steps 510-530.

At block 510, it is determined whether the UAV is required to report the timestamp information when it is determined that the flight path information of the UAV includes the timestamp information based on the timestamp indication information.

In an embodiment, the base station determines whether the UAV is required to report the timestamp information when it is determined that the flight path information of the UAV includes the timestamp information based on the timestamp indication information.

In an embodiment, when executing step 510, determining whether the UAV is required to report the timestamp information may include but is not limited to the following acts:
(6-1) determining whether to perform an extraction and switching preparation for the UAV;
(6-2) determining that the UAV is required to report the timestamp information when it is determined to perform the extraction and switching preparation for the UAV; and
(6-3) determining that the UAV is not required to report the timestamp information when it is determined to not perform the extraction and switching preparation for the UAV.

In an embodiment, act (6-1) may include but is not limited to:
(7-1) determining whether the UAV needs to return data in real time during the flight;
(7-2) determining to perform the extraction and switching preparation for the UAV when the UAV needs to return data in real time during the flight; and
(7-3) determining to not perform the extraction and switching preparation for the UAV when there is no need for the UAV to return data in real time during the flight.

At block 520, configuration information for instructing the UAV to report the flight path information carrying the timestamp information is generated when it is determined that the UAV is required to report the timestamp information.

At block 530, the configuration information is transmitted to the UAV to enable the UAV to determine whether to carry the timestamp information when reporting the flight path information based on the configuration information.

In an embodiment, when executing block 530, transmitting the configuration information to the UAV through a second RRC signaling includes:
(8-1) adding the configuration information to the second RRC signaling; and
(8-2) transmitting the configuration information to the UAV to enable the UAV to obtain the configuration information from the second RRC signaling.

In an embodiment, the second RRC signaling mentioned in (3-1) includes a UE information request (UEInformationRequest) signaling, and the UE information request signaling includes a flight path information request (FlightPathInformationReq) unit configured to carry the configuration information. In other words, the configuration information is added to the flight path information request unit of the terminal information request signaling, and then the terminal information request signaling is transmitted to the UAV, so that the UAV could obtain the configuration information from the flight path information request unit of the terminal information request signaling.

It can be seen from the above embodiments that if it is determined that the UAV is required to report the timestamp information, configuration information is generated. The configuration information is used to instruct the UAV to report the flight path information carrying the timestamp information, and to transmit the configuration information. In this way, the UAV transmits the flight path information carrying the timestamp information when reporting the flight path information according to the configuration of the base station, thereby meeting the base station's reporting requirements for the timestamp information and ensuring the reliability of information transmission.

FIG. 6 is a flowchart of another information transmission method according to an exemplary embodiment. The information transmission method is applied to an UAV. Based on FIG. 5, as illustrated in FIG. 6, the information transmission method may include the following steps 610-620.

At block 610, a third RRC signaling transmitted by the UAV is received, in which the third RRC signaling includes the flight path information carrying the timestamp information.

At block 620, the flight path information carrying the timestamp information is obtained from the third RRC signaling.

In an embodiment, the third RRC signaling at block 610 may include UE information response (UEInformationResponse) signaling, the UE information response signaling includes a flight path information report (FlightPathInformationReport) unit configured to carry the flight path information carrying the timestamp information. In other words, after the base station receives the UE information response signaling, the flight path information carrying the timestamp information is obtained from the flight path information reporting unit of the terminal information response signaling.

It can be seen from the foregoing embodiments that after receiving the third RRC signaling transmitted by the UAV, the flight path information carrying the timestamp information is obtained from the third RRC signaling, thereby improving the accuracy of information transmission.

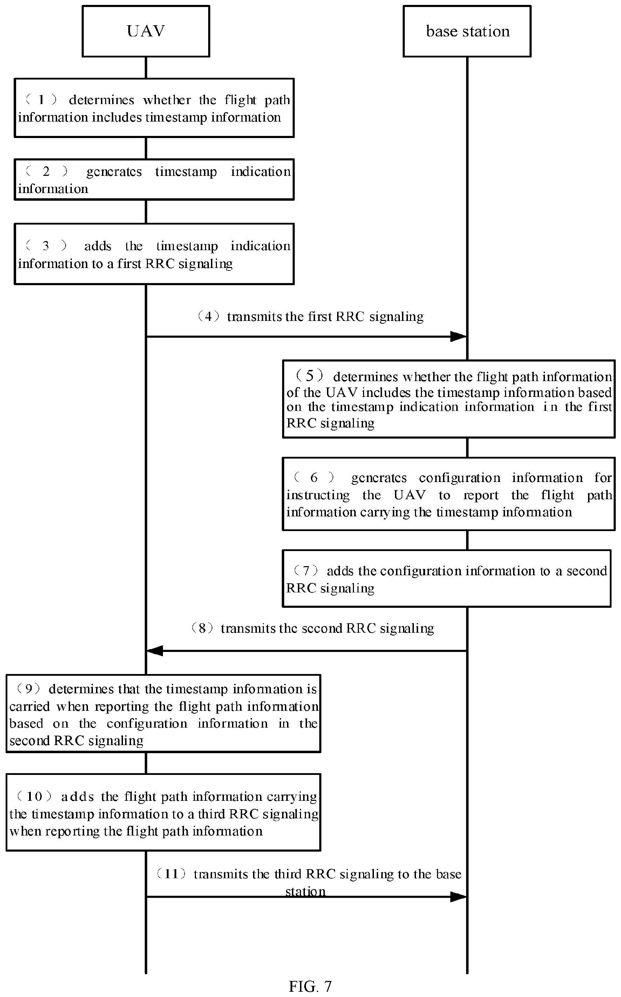

FIG. 7 is an information interaction diagram of an information transmission method according to an exemplary embodiment. As illustrated in FIG. 7, the information interaction diagram includes a UAV and a base station.
(1) the UAV determines whether the flight path information includes timestamp information.
(2) the UAV generates timestamp indication information for indicating whether the flight path information of the UAV includes the timestamp information.
(3) the UAV adds the timestamp indication information to a first RRC signaling.
(4) the UAV transmits the first RRC signaling to the base station.
(5) the base station determines whether the flight path information of the UAV includes the timestamp information based on the timestamp indication information.
(6) the base station generates configuration information for instructing the UAV to report the flight path information carrying the timestamp information.
(7) the base station adds the configuration information to a second RRC signaling.
(8) the base station transmits the second RRC signaling to the UAV.
(9) the UAV determines that the timestamp information is carried when reporting the flight path information based on the configuration information in the second RRC signaling.
(10) the flight path information carrying the timestamp information is added to a third RRC signaling when reporting the flight path information.
(11) the third RRC signaling is transmitted to the base station.

The present disclosure also provides an embodiment of an information transmission device corresponding to the foregoing embodiments of the information transmission method.

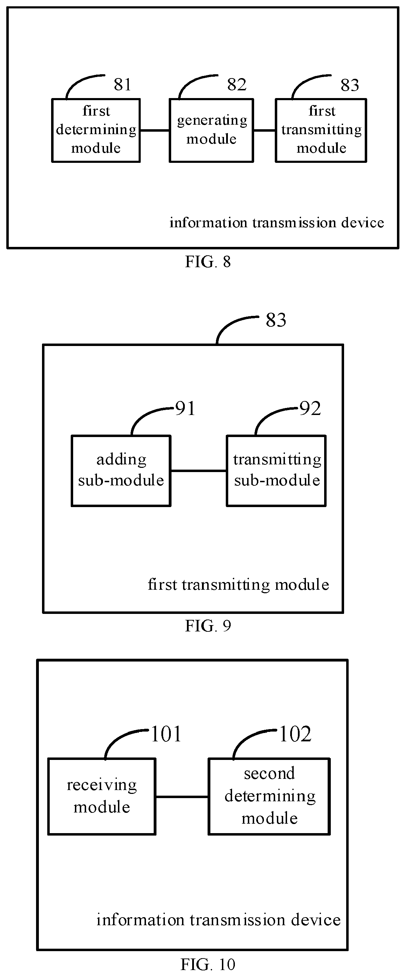

FIG. 8 is a block diagram of an information transmission device according to an exemplary embodiment. The information transmission device is applied to an UAV, and is used to executed the information transmission method as illustrated in FIG. 1. As illustrated in FIG. 8, the information transmission device includes: a first determining module 81, a generating module 82 and a first transmitting module 83. Of course, it should be understood that one or more of the modules described in this specification can be implemented by hardware, such as circuitry. The first determining module 81 is configured to determine whether flight path information of the UAV includes timestamp information. The generating module 82 is configured to generate timestamp indication information for indicating whether the flight path information of the UAV includes the timestamp information. The first transmitting module 83 is configured to transmit the timestamp indication information to a base station to enable the base station to determine whether the flight path information of the UAV includes the timestamp information based on the timestamp indication information.

Based on the above embodiments, the UAV of the disclosure determines whether the flight path information of the UAV includes timestamp information, generates timestamp indication information for indicating whether the flight path information of the UAV includes the timestamp information, and transmits the timestamp indication information to the base station, to enable the base station to determine whether the flight path information of the UAV includes the timestamp information based on the timestamp indication information. Therefore, the base station can subsequently determine, according to its needs, whether to require the UAV to report the timestamp information, so that the reporting efficiency of the UAV is improved, and resources and signaling are saved.

In an embodiment, based on the device illustrated in FIG. 8, as illustrated in FIG. 9, the first transmitting module 83 includes: an adding sub-module 91 and a transmitting sub-module 92. The adding sub-module 91 is configured to add the timestamp indication information to a first radio resource control (RRC) signaling. The transmitting sub-module 92 is configured to transmit the first RRC signaling to the base station to enable the base station to obtain the timestamp indication information from the first RRC signaling.

In an embodiment, based on the device illustrated in FIG. 9, the first RRC signaling includes at least one of:
RRC connection reconfiguration complete signaling; or
RRC connection re-establishment complete signaling; or
RRC connection resume complete signaling; or
RRC connection setup complete signaling including a timestamp available information unit configured to carry the timestamp indication information.

In an embodiment, based on the device illustrated in FIG. 8, as illustrated in FIG. 10, the apparatus includes: a receiving module 101 and a second determining module 102. The receiving module 101 is configured to receive configuration information transmitted by the base station, in which the configuration information is configured to instruct the UAV to report the flight path information carrying the timestamp information. The second determining module 102 is configured to determine that the timestamp information is carried when reporting the flight path information based on the configuration information.

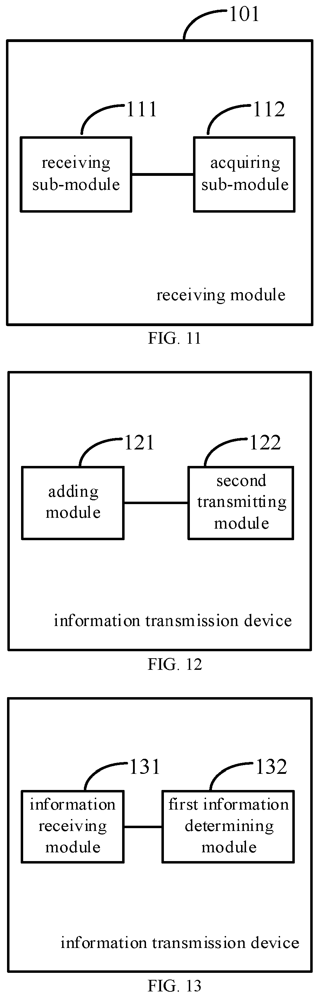

In an embodiment, based on the device illustrated in FIG. 10, as illustrated in FIG. 11, the receiving module 101 includes: a receiving sub-module 111 and an acquiring sub-module 112. The receiving sub-module 111 is configured to receive a second RRC signaling transmitted by the base station, in which the second RRC signaling includes the configuration information. The acquiring sub-module 112 is configured to acquire the configuration information from the second RRC signaling.

In an embodiment, based on the device illustrated in FIG. 11, the second RRC signaling includes a UE information request signaling, and the UE information request signaling includes a flight path information request unit configured to carry the configuration information.

In an embodiment, based on the device illustrated in FIG. 10, as illustrated in FIG. 12, the device further includes: an adding module 121 and a second transmitting module 122. The adding module 121 is configured to add the flight path information carrying the timestamp information to a third RRC signaling when reporting the flight path information. The second transmitting module 122 is configured to transmit the third RRC signaling to the base station to enable the base station to obtain the flight path information carrying the timestamp information from the third RRC signaling.

In an embodiment, based on the device illustrated in FIG. 12, the third RRC signaling includes a UE information response signaling, the UE information response signaling includes a flight path information report unit configured to carry the flight path information carrying the timestamp information.

It can be seen from the above embodiments that by receiving the configuration information transmitted by the base station for instructing the UAV to transmit the flight path information carrying the timestamp information. According to the configuration information, it is determined whether the timestamp information is carried when reporting the flight path information based on the configuration information, and the flight path information carrying the timestamp information is added to the third RRC signaling when reporting the flight path information, and the third RRC signaling is transmitted to the base station, so that the base station could obtain the flight path information carrying the timestamp information from the third RRC signaling, and the flight path information carrying the timestamp information is transmitted according to the configuration of the base station, and reliability of information transmission is improved through the third RRC signaling.

FIG. 13 is a block diagram of an information transmission device according to an exemplary embodiment. The information transmission device is applied to a base station, and is used to executed the information transmission method according to FIG. 4. As illustrated in FIG. 13, the information transmission device includes: an information receiving module 131 and a first information determining module 132. The information receiving module 131 is configured to receive timestamp indication information transmitted by an unmanned aerial vehicle (UAV), in which the timestamp indication information is configured to indicate whether flight path information of the UAV includes timestamp information. The first information determining module 132 is configured to determine whether the flight path information of the UAV includes the timestamp information based on the timestamp indication information.

Based on the above embodiments, after the base station receives the timestamp indication information transmitted by the UAV, whether the flight path information of the UAV includes the timestamp information is determined based on the timestamp indication information, and the base station can subsequently determine, according to its needs, whether to require the UAV to report the timestamp information, so that the reporting efficiency of the UAV is improved, and resources and signaling are saved.

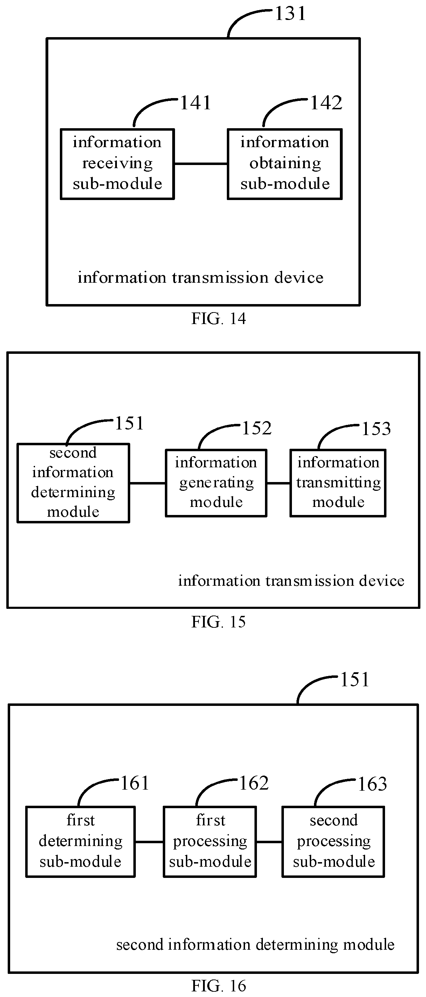

In an embodiment, based on the device illustrated in FIG. 13, as illustrated in FIG. 14, the information receiving module includes: an information receiving sub-module 141 and an information obtaining sub-module 142. The information receiving sub-module 141 is configured to receive a first radio resource control (RRC) signaling transmitted by the UAV, in which the first RRC signaling includes the timestamp indication information. The information obtaining sub-module 142 is configured to obtain the timestamp indication information from the first RRC signaling.

In an embodiment, based on the device illustrated in FIG. 14, the first RRC signaling includes at least one of:
RRC connection reconfiguration complete signaling; or
RRC connection re-establishment complete signaling; or
RRC connection resume complete signaling; or
RRC connection setup complete signaling including a timestamp available information unit configured to carry the timestamp indication information.

In an embodiment, based on the device illustrated in FIG. 13, as illustrated in FIG. 15, the device further includes: a second information determining module 151, an information generating module 152 and an information transmitting module 153. The second information determining module 151 is configured to determine whether the UAV is required to report the timestamp information when it is determined that the flight path information of the UAV includes the timestamp information based on the timestamp indication information. The information generating module 152 is configured to generate configuration information for instructing the UAV to report the flight path information carrying the timestamp information when it is determined that the UAV is required to report the timestamp information. The information transmitting module 153 is configured to transmit the configuration information to the UAV to enable the UAV to determine whether to carry the timestamp information when reporting the flight path information based on the configuration information.

It can be seen from the above embodiments that if it is determined that the UAV is required to report the timestamp information, configuration information is generated. The configuration information is used to instruct the UAV to report the flight path information carrying the timestamp information, and to transmit the configuration information to the UAV. In this way, the UAV transmits the flight path information carrying the timestamp information when reporting the flight path information according to the configuration of the base station, thereby meeting the base station's reporting requirements for the timestamp information and ensuring the reliability of information transmission.

In an embodiment, based on the device illustrated in FIG. 15, as illustrated in FIG. 16, the second information determining module 151 includes: a first determining sub-module 161, a first processing sub-module 162 and a second processing sub-module 163. The first determining sub-module 161 is configured to determine whether to perform an extraction and switching preparation for the UAV. The first processing sub-module 162 is configured to determine that the UAV is required to report the timestamp information when it is determined to perform the extraction and switching preparation for the UAV. The second processing sub-module 163 is configured to determine that the UAV is not required to report the timestamp information when it is determined to not perform the extraction and switching preparation for the UAV.

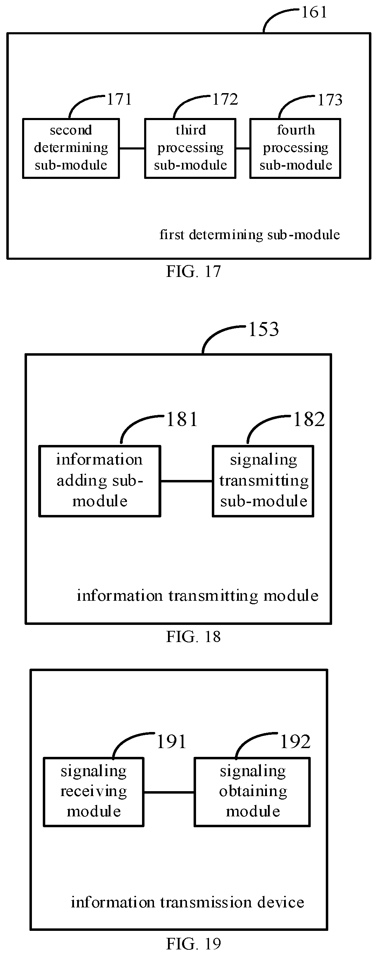

In an embodiment, based on the device illustrated in FIG. 16, as illustrated in FIG. 17, the first determining sub-module 161 includes: a second determining sub-module 171, a third processing sub-module 172 and a fourth processing sub-module 173. The second determining sub-module 171 is configured to determine whether the UAV needs to return data in real time during the flight. The third processing sub-module 172 is configured to determine to perform the extraction and switching preparation for the UAV when the UAV needs to return data in real time during the flight. The fourth processing sub-module 173 is configured to determine to not perform the extraction and switching preparation for the UAV when there is no need for the UAV to return data in real time during the flight.

In an embodiment, based on the device illustrated in FIG. 15, as illustrated in FIG. 18, the information transmitting module 153 includes: an information adding sub-module 181 and a signaling transmitting sub-module 182. The information adding sub-module 181 is configured to add the configuration information to a second RRC signaling. The signaling transmitting sub-module 182 is configured to transmit the configuration information to the UAV to enable the UAV to obtain the configuration information from the second RRC signaling.

In an embodiment, based on the device illustrated in FIG. 18, the second RRC signaling includes a UE information request signaling, and the UE information request signaling includes a flight path information request unit configured to carry the configuration information.

In an embodiment, based on the device illustrated in FIG. 15, as illustrated in FIG. 19, the device further includes: a signaling receiving module 191 and a signaling obtaining module 192. The signaling receiving module 191 is configured to receive a third RRC signaling transmitted by the UAV, in which the third RRC signaling includes the flight path information carrying the timestamp information. The signaling obtaining module 192 is configured to obtain the flight path information carrying the timestamp information from the third RRC signaling.

In an embodiment, based on the device illustrated in FIG. 19, the third RRC signaling includes a UE information response signaling, and the UE information response signaling includes a flight path information report unit configured to carry the flight path information carrying the timestamp information.

It can be seen from the foregoing embodiments that after receiving the third RRC signaling sent by the UAV, the flight path information carrying the timestamp information is obtained from the third RRC signaling, thereby improving the accuracy of information transmission.

Since the device embodiments basically correspond to the method embodiments, the relevant part refers to the description of the method embodiments. The device embodiments described above are merely illustrative. The units described above as separate components may or may not be physically separated, and the components displayed as units may or may not be physical units, that is, they may be located at one place, or distributed at different network units. Some or all of the modules are selected according to actual requirements to achieve the objectives of the solutions of the present disclosure. Those of ordinary skill in the art could understand and implement the solution without inventive works.

Correspondingly, the present disclosure provides a non-transitory computer-readable storage medium with computer programs stored on the storage medium, in which the computer programs are used to execute the information transmission method according to FIGS. 1-3.

Correspondingly, the present disclosure further provides a non-transitory computer-readable storage medium with computer programs stored on the storage medium, in which the computer programs are used to execute the information transmission method according to FIGS. 4-7.

Correspondingly, the present disclosure further provides an information transmission device, applied to an UAV. The device includes: a processor and a memory for storing instructions executable by the processor. The processor is configured to: determine whether flight path information of the UAV includes timestamp information, generate timestamp indication information for indicating whether the flight path information of the UAV includes the timestamp information, and transmit the timestamp indication information to a base station to enable the base station to determine whether the flight path information of the UAV includes the timestamp information based on the timestamp indication information.

Correspondingly, the present disclosure further provides an information transmission device, applied to an UAV. The device includes: a processor and a memory for storing instructions executable by the processor. The processor is configured to: receive timestamp indication information transmitted by an UAV, in which the timestamp indication information is configured to indicate whether flight path information of the UAV includes timestamp information; and determine whether the flight path information of the UAV includes the timestamp information based on the timestamp indication information.

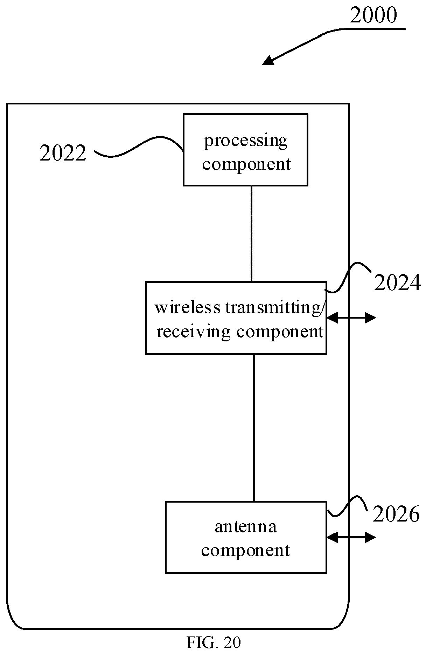

As illustrated in FIG. 20, FIG. 20 is a schematic diagram of an information transmission device according to an exemplary embodiment. The device 2000 may be provided as a base station. As illustrated in FIG. 20, the device 2000 includes a processing component 2022, a wireless transmitting/receiving component 2024, an antenna component 2026, and a signal processing portion specific to a wireless interface. The processing component 2022 may further include one or more processors.

One of the processors in the processing component 2022 may be configured to execute any of the foregoing information transmission methods.

## Claims

1. An information transmission method, applied to a system for information transmission comprising an unmanned aerial vehicle, UAV and a base station, comprising:
determining (110), by the UAV, whether flight path information of the UAV comprises timestamp information;
generating (120), by the UAV, timestamp indication information for indicating whether the flight path information of the UAV comprises the timestamp information; and
transmitting (130), by the UAV, the timestamp indication information to the base station;
receiving (410), by the base station, the timestamp indication information transmitted by the UAV;
determining (420), by the base station, whether the flight path information of the UAV comprises the timestamp information based on the timestamp indication information;
determining (510), by the base station, whether the UAV is required to report the timestamp information according to requirements of the base station when it is determined that the flight path information of the UAV comprises the timestamp information based on the timestamp indication information;
generating (520), by the base station, configuration information for instructing the UAV to report the flight path information carrying the timestamp information when it is determined that the UAV is required to report the timestamp information;
transmitting (530), by the base station, the configuration information to the UAV;
receiving (310), by the UAV, the configuration information transmitted by the base station; and
transmitting (340), by the UAV, the flight path information carrying the timestamp information to the base station.

2. The method according to claim 1, wherein the transmitting (130), by the UAV, the timestamp indication information to the base station comprises:
adding, by the UAV, the timestamp indication information to a first radio resource control, RRC, signaling; and
transmitting, by the UAV, the first RRC signaling to the base station to enable the base station to obtain the timestamp indication information from the first RRC signaling.

3. The method according to claim 2, wherein the first RRC signaling comprises at least one of:
RRC connection reconfiguration complete signaling; or
RRC connection re-establishment complete signaling; or
RRC connection resume complete signaling; or
RRC connection setup complete signaling comprising a timestamp available information unit configured to carry the timestamp indication information.

4. The method according to any preceding claim, further comprising:
determining (320), by the UAV, that the timestamp information is carried when reporting the flight path information based on the configuration information.

5. The method according to claim 4, wherein the configuration information is configured to instruct the UAV to report the flight path information carrying the timestamp information when the base station determines to perform an
extraction and switching preparation for the UAV; or,
the configuration information is configured to instruct the UAV to report the flight path information carrying the timestamp information when the base station determines to require the UAV to return data in real time during the flight.

6. The method according to claim 4, wherein the receiving (310), by the UAV, the configuration information transmitted by the base station comprises:
receiving, by the UAV, a second RRC signaling transmitted by the base station, wherein the second RRC signaling comprises the configuration information; and
acquiring, by the UAV, the configuration information from the second RRC signaling;
wherein the second RRC signaling comprises a UE information request signaling, and the UE information request signaling comprises a flight path information request unit configured to carry the configuration information.

7. The method according to claim 4, further comprising:
adding (330), by the UAV, the flight path information carrying the timestamp information to a third RRC signaling when reporting the flight path information; and
transmitting (340), by the UAV, the third RRC signaling to the base station to enable the base station to obtain the flight path information carrying the timestamp information from the third RRC signaling;
wherein the third RRC signaling comprises a UE information response signaling, the UE information response signaling comprises a flight path information report unit configured to carry the flight path information carrying the timestamp information.

8. The method according to claim 1, wherein the receiving (410), by the base station, the timestamp indication information transmitted by the UAV comprises:
receiving, by the base station, a first radio resource control, RRC, signaling transmitted by the UAV, wherein the first RRC signaling comprises the timestamp indication information; and
obtaining, by the base station, the timestamp indication information from the first RRC signaling.

9. The method according to claim 1, wherein the determining (510), by the base station, whether the UAV is required to report the timestamp information comprises:
determining, by the base station, whether to perform an extraction and switching preparation for the UAV,
wherein the extraction and switching preparation is configured to indicate a need of the UAV to return data in real time during flight
determining, by the base station, that the UAV is required to report the timestamp information when performing the extraction and switching preparation for the UAV; and
determining, by the base station, that the UAV is not required to report the timestamp information when not performing the extraction and switching preparation for the UAV.

10. The method according to claim 9, wherein the determining, by the base station, whether to perform the extraction and switching preparation for the UAV comprises:
determining, by the base station, whether the UAV needs to return data in real time during the flight;
determining, by the base station, to perform the extraction and switching preparation for the UAV when the UAV needs to return data in real time during the flight; and
determining, by the base station, to not perform the extraction and switching preparation for the UAV when there is no need for the UAV to return data in real time during the flight.

11. The method according to claim 1, wherein the transmitting (530), by the base station, the configuration information to the UAV comprises:
adding, by the base station, the configuration information to a second RRC signaling; and
transmitting, by the base station, the configuration information to the UAV to enable the UAV to obtain the configuration information from the second RRC signaling;
wherein the second RRC signaling comprises a UE information request signaling, and the UE information request signaling comprises a flight path information request unit configured to carry the configuration information.

12. The method according to claim 1, further comprising:
receiving (610), by the base station, a third RRC signaling transmitted by the UAV, wherein the third RRC signaling comprises the flight path information carrying the timestamp information; and
obtaining (620), by the base station, the flight path information carrying the timestamp information from the third RRC signaling;
wherein the third RRC signaling comprises a UE information response signaling, and the UE information response signaling comprises a flight path information report unit configured to carry the flight path information carrying the timestamp information.

13. A system for information transmission, comprising an unmanned aerial vehicle, UAV and a base station, wherein the UAV comprises:
a processor (2022); and
a memory for storing instructions executable by the processor;
wherein, the processor is configured to:
determine whether flight path information of the UAV comprises timestamp information;
generate timestamp indication information for indicating whether the flight path information of the UAV comprises the timestamp information; and
transmit the timestamp indication information to a base station;
receive configuration information transmitted by the base station; and
transmit the flight path information carrying the timestamp information to the base station;
and the base station comprises:
a processor (2022); and
a memory for storing instructions executable by the processor;
wherein, the processor is configured to:
receive timestamp indication information transmitted by an unmanned aerial vehicle, UAV, wherein the timestamp indication information is configured to indicate whether flight path information of the UAV comprises timestamp information;
determine whether the flight path information of the UAV comprises the timestamp information based on the timestamp indication information; and
determine whether to require the UAV to report the timestamp information according to requirements of the base station when it is determined that the flight path information of the UAV comprises the timestamp information based on the timestamp indication information;
generate the configuration information for instructing the UAV to report the flight path information carrying the timestamp information when it is determined that the UAV is required to report the timestamp information; and
transmit the configuration information to the UAV.

## Patentansprüche

1. Ein Informationsübertragungsverfahren, angewendet auf ein System zur Informationsübertragung, das ein unbemanntes Luftfahrzeug, UAV, und eine Basisstation umfasst, umfassend:
Bestimmen (110), durch das UAV, ob Flugpfadinformationen des UAV Zeitstempelinformationen umfassen;
Erzeugen (120), durch das UAV, von Zeitstempelanzeigeinformationen zum Anzeigen, ob die Flugpfadinformationen des UAV die Zeitstempelinformationen umfassen; und
Übertragen (130), durch das UAV, der Zeitstempelanzeigeinformationen an die Basisstation;
Empfangen (410), durch die Basisstation, der durch das UAV übertragenen Zeitstempelanzeigeinformationen;
Bestimmen (420), durch die Basisstation, ob die Flugpfadinformationen des UAV die Zeitstempelinformationen basierend auf den Zeitstempelanzeigeinformationen umfassen;
Bestimmen (510), durch die Basisstation, ob das UAV die Zeitstempelinformationen gemäß den Anforderungen der Basisstation zu melden braucht, wenn basierend auf den Zeitstempelanzeigeinformationen bestimmt wird, dass die Flugpfadinformationen des UAV die Zeitstempelinformationen umfassen;
Erzeugen (520), durch die Basisstation, von Konfigurationsinformationen zum Anweisen des UAV, die Flugpfadinformationen, die die Zeitstempelinformationen tragen, zu melden, wenn bestimmt wird, dass das UAV die Zeitstempelinformationen zu melden braucht;
Übertragen (530), durch die Basisstation, der Konfigurationsinformationen an das UAV;
Empfangen (310), durch das UAV, der durch die Basisstation übertragenen Konfigurationsinformationen; und
Übertragen (340), durch das UAV, der die Zeitstempelinformationen tragenden Flugpfadinformationen an die Basisstation.

2. Verfahren nach Anspruch 1, wobei das Übertragen (130), durch das UAV, der Zeitstempelanzeigeinformationen an die Basisstation umfasst:
Hinzufügen, durch das UAV, der Zeitstempelanzeigeinformationen zu einer ersten Funkressourcensteuerungs-, RRC, Signalisierung; und
Übertragen, durch das UAV, der ersten RRC-Signalisierung an die Basisstation, um der Basisstation zu ermöglichen, die Zeitstempelanzeigeinformationen aus der ersten RRC-Signalisierung zu erhalten.

3. Verfahren nach Anspruch 2, wobei die erste RRC-Signalisierung mindestens eines umfasst von:
RRC-Verbindungsneukonfigurationsabschluss-Signalisierung; oder
RRC-Verbindungswiederherstellungsabschluss-Signalisierung; oder
RRC-Verbindungswiederaufnahmeabschluss-Signalisierung; oder
RRC-Verbindungsaufbauabschluss-Signalisierung, umfassend eine Zeitstempelverfügbarkeitsinformationseinheit, die konfiguriert ist, um die Zeitstempelanzeigeinformationen zu tragen.

4. Verfahren nach einem der vorhergehenden Ansprüche, ferner umfassend:
Bestimmen (320), durch das UAV, dass die Zeitstempelinformationen getragen werden, wenn die Flugpfadinformationen basierend auf den Konfigurationsinformationen gemeldet werden.

5. Verfahren nach Anspruch 4, wobei die Konfigurationsinformationen konfiguriert sind, um das UAV anzuweisen, die die Zeitstempelinformationen tragenden Flugpfadinformationen zu melden, wenn die Basisstation bestimmt, eine Extraktion und Umschaltvorbereitung für das UAV durchzuführen; oder,
wobei die Konfigurationsinformationen konfiguriert sind, um das UAV anzuweisen, die die Zeitstempelinformationen tragenden Flugpfadinformationen zu melden, wenn die Basisstation bestimmt, dass das UAV während des Fluges Echtzeitdaten zurückgeben muss.

6. Verfahren nach Anspruch 4, wobei das Empfangen (310), durch das UAV, der durch die Basisstation übertragenen Konfigurationsinformationen umfasst:
Empfangen, durch das UAV, einer durch die Basisstation übertragenen zweiten RRC-Signalisierung, wobei die zweite RRC-Signalisierung die Konfigurationsinformationen umfasst; und
Erhalten, durch das UAV, der Konfigurationsinformationen aus der zweiten RRC-Signalisierung;
wobei die zweite RRC-Signalisierung eine UE-Informationsanforderungssignalisierung umfasst, und die UE-Informationsanforderungssignalisierung eine Flugpfadinformationsanforderungseinheit umfasst, die konfiguriert ist, um die Konfigurationsinformationen zu tragen.

7. Verfahren nach Anspruch 4, ferner umfassend:
Hinzufügen (330), durch das UAV, der die Zeitstempelinformationen tragenden Flugpfadinformationen zu einer dritten RRC-Signalisierung, wenn die Flugpfadinformationen gemeldet werden; und
Übertragen (340), durch das UAV, der dritten RRC-Signalisierung an die Basisstation, um der Basisstation zu ermöglichen, die die Zeitstempelinformationen tragenden Flugpfadinformationen aus der dritten RRC-Signalisierung zu erhalten;
wobei die dritte RRC-Signalisierung eine UE-Informationsantwortsignalisierung umfasst, die UE-Informationsantwortsignalisierung eine Flugpfadinformationsmeldungseinheit umfasst, die konfiguriert ist, um die die Zeitstempelinformationen tragenden Flugpfadinformationen zu tragen.

8. Verfahren nach Anspruch 1, wobei das Empfangen (410), durch die Basisstation, der durch das UAV übertragenen Zeitstempelanzeigeinformationen umfasst:
Empfangen, durch die Basisstation, einer durch das UAV übertragenen ersten Funkressourcensteuerung, RRC, Signalisierung, wobei die erste RRC-Signalisierung die Zeitstempelanzeigeinformationen umfasst; und
Erhalten, durch die Basisstation, der Zeitstempelanzeigeinformationen aus der ersten RRC-Signalisierung.

9. Verfahren nach Anspruch 1, wobei das Bestimmen (510), durch die Basisstation, ob das UAV die Zeitstempelinformationen zu melden braucht, umfasst:
Bestimmen, durch die Basisstation, ob eine Extraktion und Umschaltvorbereitung für das UAV durchgeführt wird,
wobei die Extraktion und Umschaltvorbereitung konfiguriert ist, um einen Bedarf des UAV anzuzeigen, während des Fluges Echtzeitdaten zurückzugeben,
Bestimmen, durch die Basisstation, dass das UAV die Zeitstempelinformationen zu melden braucht, wenn die Extraktion und Umschaltvorbereitung für das UAV durchgeführt wird; und
Bestimmen, durch die Basisstation, dass das UAV die Zeitstempelinformationen nicht zu melden braucht, wenn die Extraktion und Umschaltvorbereitung für das UAV nicht durchgeführt wird.

10. Verfahren nach Anspruch 9, wobei das Bestimmen, durch die Basisstation, ob die Extraktion und Umschaltvorbereitung für das UAV durchgeführt wird, umfasst:
Bestimmen, durch die Basisstation, ob das UAV während des Fluges Echtzeitdaten zurückgeben muss;
Bestimmen, durch die Basisstation, die Extraktion und Umschaltvorbereitung für das UAV durchzuführen, wenn das UAV während des Fluges Echtzeitdaten zurückgeben muss; und
Bestimmen, durch die Basisstation, die Extraktion und Umschaltvorbereitung für das UAV nicht durchzuführen, wenn das UAV während des Fluges Echtzeitdaten nicht zurückzugeben braucht.

11. Verfahren nach Anspruch 1, wobei das Übertragen (530), durch die Basisstation, der Konfigurationsinformationen an das UAV umfasst:
Hinzufügen, durch die Basisstation, der Konfigurationsinformationen zu einer zweiten RRC-Signalisierung; und
Übertragen, durch die Basisstation, der Konfigurationsinformationen an das UAV, um dem UAV zu ermöglichen, die Konfigurationsinformationen aus der zweiten RRC-Signalisierung zu erhalten;
wobei die zweite RRC-Signalisierung eine UE-Informationsanforderungssignalisierung umfasst, und die UE-Informationsanforderungssignalisierung eine Flugpfadinformationsanforderungseinheit umfasst, die konfiguriert ist, um die Konfigurationsinformationen zu tragen.

12. Verfahren nach Anspruch 1, ferner umfassend:
Empfangen (610), durch die Basisstation, einer durch das UAV übertragenen dritten RRC-Signalisierung, wobei die dritte RRC-Signalisierung die die Zeitstempelinformationen tragenden Flugpfadinformationen umfasst; und
Erhalten (620), durch die Basisstation, der die Zeitstempelinformationen tragenden Flugpfadinformationen aus der dritten RRC-Signalisierung;
wobei die dritte RRC-Signalisierung eine UE-Informationsantwortsignalisierung umfasst, und die UE-Informationsantwortsignalisierung eine Flugpfadinformationsmeldungseinheit umfasst, die konfiguriert ist, um die die Zeitstempelinformationen tragenden Flugpfadinformationen zu tragen.

13. Ein System zur Informationsübertragung, umfassend ein unbemanntes Luftfahrzeug, UAV, und eine Basisstation, wobei das UAV umfasst:
einen Prozessor (2022); und
einen Speicher zum Speichern von durch den Prozessor ausführbaren Anweisungen;
wobei der Prozessor konfiguriert ist, um: zu :
bestimmen, ob Flugpfadinformationen des UAV Zeitstempelinformationen umfassen;
Zeitstempelanzeigeinformationen zu erzeugen, um anzuzeigen, ob die Flugpfadinformationen des UAV die Zeitstempelinformationen umfassen; und
die Zeitstempelanzeigeinformationen an eine Basisstation zu übertragen;
Konfigurationsinformationen zu empfangen, die durch die Basisstation übertragen werden; und
die die Zeitstempelinformationen tragenden Flugpfadinformationen an die Basisstation zu übertragen; und
wobei die Basisstation umfasst:
einen Prozessor (2022); und
einen Speicher zum Speichern von durch den Prozessor ausführbaren Anweisungen;
wobei der Prozessor konfiguriert ist, um:
durch ein unbemanntes Luftfahrzeug, UAV,
übertragene Zeitstempelanzeigeinformationen zu empfangen, wobei die Zeitstempelanzeigeinformationen konfiguriert sind, um anzuzeigen, ob Flugpfadinformationen des UAV Zeitstempelinformationen umfassen;
zu bestimmen, ob die Flugpfadinformationen des UAV die Zeitstempelinformationen basierend auf den Zeitstempelanzeigeinformationen umfassen; und
zu bestimmen, ob das UAV die Zeitstempelinformationen gemäß den Anforderungen der Basisstation zu melden braucht, wenn basierend auf den Zeitstempelanzeigeinformationen bestimmt wird, dass die Flugpfadinformationen des UAV die Zeitstempelinformationen umfassen;
die Konfigurationsinformationen zu erzeugen, um das UAV anzuweisen, die die Zeitstempelinformationen tragenden Flugpfadinformationen zu melden, wenn bestimmt wird, dass das UAV die Zeitstempelinformationen zu melden braucht; und
die Konfigurationsinformationen an das UAV zu übertragen.

## Revendications

1. Procédé de transmission d'informations, appliqué à un système de transmission d'informations comprenant un véhicule aérien sans pilote, UAV, et une station de base, comprenant :
la détermination (110), par l'UAV, si des informations de trajectoire de vol de l'UAV comprennent des informations d'horodatage ;
la génération (120), par l'UAV, d'informations d'indication d'horodatage pour indiquer si les informations de trajectoire de vol de l'UAV comprennent les informations d'horodatage ; et
la transmission (130), par l'UAV, des informations d'indication d'horodatage à la station de base ;
la réception (410), par la station de base, des informations d'indication d'horodatage transmises par l'UAV ;
la détermination (420), par la station de base, si les informations de trajectoire de vol de l'UAV comprennent les informations d'horodatage sur la base des informations d'indication d'horodatage ;
la détermination (510), par la station de base, si l'UAV est tenu de rapporter les informations d'horodatage selon les exigences de la station de base lorsqu'il est déterminé que les informations de trajectoire de vol de l'UAV comprennent les informations d'horodatage sur la base des informations d'indication d'horodatage ;
la génération (520), par la station de base, d'informations de configuration pour instruire l'UAV de rapporter les informations de trajectoire de vol portant les informations d'horodatage lorsqu'il est déterminé que l'UAV est tenu de rapporter les informations d'horodatage ;
la transmission (530), par la station de base, des informations de configuration à l'UAV ;
la réception (310), par l'UAV, des informations de configuration transmises par la station de base ; et
la transmission (340), par l'UAV, des informations de trajectoire de vol portant les informations d'horodatage à la station de base.

2. Procédé selon la revendication 1, dans lequel la transmission (130), par l'UAV, des informations d'indication d'horodatage à la station de base comprend :
l'ajout, par l'UAV, des informations d'indication d'horodatage à une première signalisation de contrôle de ressources radio, RRC ; et
la transmission, par l'UAV, de la première signalisation RRC à la station de base pour permettre à la station de base d'obtenir les informations d'indication d'horodatage à partir de la première signalisation RRC.

3. Procédé selon la revendication 2, dans lequel
la première signalisation RRC comprend au moins l'un de :
une signalisation de réconfiguration de connexion RRC terminée ; ou
une signalisation de rétablissement de connexion RRC terminée ; ou
une signalisation de reprise de connexion RRC terminée ; ou
une signalisation d'établissement de connexion RRC terminée comprenant une unité d'information d'horodatage disponible configurée pour porter les informations d'indication d'horodatage.

4. Procédé selon l'une quelconque des revendications précédentes, comprenant en outre :
la détermination (320), par l'UAV, que les informations d'horodatage sont portées lors du rapport des informations de trajectoire de vol sur la base des informations de configuration.

5. Procédé selon la revendication 4, dans lequel les informations de configuration sont configurées pour instruire l'UAV de rapporter les informations de trajectoire de vol portant les informations d'horodatage lorsque la station de base détermine d'effectuer une extraction et une préparation de commutation pour l'UAV ;
ou,
les informations de configuration sont configurées pour instruire l'UAV de rapporter les informations de trajectoire de vol portant les informations d'horodatage lorsque la station de base détermine qu'il est nécessaire que l'UAV retourne des données en temps réel pendant le vol.

6. Procédé selon la revendication 4, dans lequel la réception (310), par l'UAV, des informations de configuration transmises par la station de base comprend :
la réception, par l'UAV, d'une deuxième signalisation RRC transmise par la station de base, la deuxième signalisation RRC comprenant les informations de configuration ; et
l'obtention, par l'UAV, des informations de configuration à partir de la deuxième signalisation RRC ;
la deuxième signalisation RRC comprenant une signalisation de demande d'informations UE, et la signalisation de demande d'informations UE comprenant une unité de demande d'informations de trajectoire de vol configurée pour porter les informations de configuration.

7. Procédé selon la revendication 4, comprenant en outre :
l'ajout (330), par l'UAV, des informations de trajectoire de vol portant les informations d'horodatage à une troisième signalisation RRC lors du rapport des informations de trajectoire de vol ; et
la transmission (340), par l'UAV, de la troisième signalisation RRC à la station de base pour permettre à la station de base d'obtenir les informations de trajectoire de vol portant les informations d'horodatage à partir de la troisième signalisation RRC ;
la troisième signalisation RRC comprenant une signalisation de réponse d'informations UE, la signalisation de réponse d'informations UE comprenant une unité de rapport d'informations de trajectoire de vol configurée pour porter les informations de trajectoire de vol portant les informations d'horodatage.

8. Procédé selon la revendication 1, dans lequel la réception (410), par la station de base, des informations d'indication d'horodatage transmises par l'UAV comprend :
la réception, par la station de base, d'une première signalisation de contrôle de ressources radio, RRC, transmise par l'UAV, la première signalisation RRC comprenant les informations d'indication d'horodatage ; et
l'obtention, par la station de base, des informations d'indication d'horodatage à partir de la première signalisation RRC.

9. Procédé selon la revendication 1, dans lequel la détermination (510), par la station de base, si l'UAV est tenu de rapporter les informations d'horodatage comprend :
la détermination, par la station de base, s'il faut effectuer une extraction et une préparation de commutation pour l'UAV,
l'extraction et la préparation de commutation étant configurées pour indiquer un besoin de l'UAV de retourner des données en temps réel pendant le vol,
la détermination, par la station de base, que l'UAV est tenu de rapporter les informations d'horodatage lors de l'exécution de l'extraction et de la préparation de commutation pour l'UAV ; et
la détermination, par la station de base, que l'UAV n'est pas tenu de rapporter les informations d'horodatage lorsqu'il n'est pas procédé à l'extraction et à la préparation de commutation pour l'UAV.

10. Procédé selon la revendication 9, dans lequel la détermination, par la station de base, s'il faut effectuer l'extraction et la préparation de commutation pour l'UAV comprend :
la détermination, par la station de base, si l'UAV doit retourner des données en temps réel pendant le vol ;
la détermination, par la station de base, d'effectuer l'extraction et la préparation de commutation pour l'UAV lorsque l'UAV doit retourner des données en temps réel pendant le vol; et
la détermination, par la station de base, de ne pas effectuer l'extraction et la préparation de commutation pour l'UAV lorsqu'il n'est pas nécessaire que l'UAV retourne des données en temps réel pendant le vol.

11. Procédé selon la revendication 1, dans lequel la transmission (530), par la station de base, des informations de configuration à l'UAV comprend :
l'ajout, par la station de base, des informations de configuration à une deuxième signalisation RRC ; et
la transmission, par la station de base, des informations de configuration à l'UAV pour permettre à l'UAV d'obtenir les informations de configuration à partir de la deuxième signalisation RRC ;
la deuxième signalisation RRC comprenant une signalisation de demande d'informations UE, et la signalisation de demande d'informations UE comprenant une unité de demande d'informations de trajectoire de vol configurée pour porter les informations de configuration.

12. Procédé selon la revendication 1, comprenant en outre :
la réception (610), par la station de base, d'une troisième signalisation RRC transmise par l'UAV, la troisième signalisation RRC comprenant les informations de trajectoire de vol portant les informations d'horodatage ; et
l'obtention (620), par la station de base, des informations de trajectoire de vol portant les informations d'horodatage à partir de la troisième signalisation RRC ;
la troisième signalisation RRC comprenant une signalisation de réponse d'informations UE, et la signalisation de réponse d'informations UE comprenant une unité de rapport d'informations de trajectoire de vol configurée pour porter les informations de trajectoire de vol portant les informations d'horodatage.

13. Système de transmission d'informations, comprenant un véhicule aérien sans pilote, UAV, et une station de base, dans lequel l'UAV comprend :
un processeur (2022) ; et
une mémoire pour stocker des instructions exécutables par le processeur ;
le processeur étant configuré pour :
déterminer si des informations de trajectoire de vol de l'UAV comprennent des informations d'horodatage ;
générer des informations d'indication d'horodatage pour indiquer si les informations de trajectoire de vol de l'UAV comprennent les informations d'horodatage ; et
transmettre les informations d'indication d'horodatage à une station de base ; recevoir des informations de configuration transmises par la station de base ;
et transmettre les informations de trajectoire de vol portant les informations d'horodatage à la station de base ;
et la station de base comprend :
un processeur (2022) ; et
une mémoire pour stocker des instructions exécutables par le processeur ;
le processeur étant configuré pour :
recevoir des informations d'indication d'horodatage transmises par un véhicule aérien sans pilote, UAV, les informations d'indication d'horodatage étant configurées pour indiquer si des informations de trajectoire de vol de l'UAV comprennent des informations d'horodatage ;
déterminer si les informations de trajectoire de vol de l'UAV comprennent les informations d'horodatage sur la base des informations d'indication d'horodatage ; et
déterminer si l'UAV est tenu de rapporter les informations d'horodatage selon les exigences de la station de base lorsqu'il est déterminé que les informations de trajectoire de vol de l'UAV comprennent les informations d'horodatage sur la base des informations d'indication d'horodatage ;
générer les informations de configuration pour instruire l'UAV de rapporter les informations de trajectoire de vol portant les informations d'horodatage lorsqu'il est déterminé que l'UAV est tenu de rapporter les informations d'horodatage ; et
transmettre les informations de configuration à l'UAV.
